(19) Europäisches Patentamt
European Patent Office
Office européen des brevets

(11) **EP 2 605 854 B1**

(12) **FASCICULE DE BREVET EUROPEEN**

(45) Date de publication et mention de la délivrance du brevet:
**20.02.2019 Bulletin 2019/08**

(21) Numéro de dépôt: **11758503.4**

(22) Date de dépôt: **12.08.2011**

(51) Int Cl.:
**B01J 8/00** *(2006.01)*   **B01D 45/08** *(2006.01)*

(86) Numéro de dépôt international:
**PCT/FR2011/051913**

(87) Numéro de publication internationale:
**WO 2012/022910 (23.02.2012 Gazette 2012/08)**

(54) **PROCÉDÉ, RÉACTEUR ET UTILISATION DE SÉPARATION DU GAZ DANS UN MÉLANGE FLUIDISÉ GAZ / SOLIDES**

VERFAHREN, REAKTOR UND ANWENDUNG ZUR GASABSCHEIDUNG IN EINER FLUIDISIERTEN GAS-/FESTSTOFFMISCHUNG

METHOD, REACTOR AND USE FOR SEPARATING GAS IN A FLUIDIZED GAS/SOLID MIXTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2010  FR 1056687**

(43) Date de publication de la demande:
**26.06.2013  Bulletin 2013/26**

(73) Titulaire: **Total Raffinage France**
**92400 Courbevoie (FR)**

(72) Inventeurs:
• **LLAMAS, Juan-David**
**F-76600 Le Havre (FR)**
• **LEROY, Patrick**
**F-76430 Saint Vigor D'ymonville (FR)**
• **DEROUIN, Céline**
**F-76600 Le Havre (FR)**
• **LENEPVEU, Nicolas**
**F-76290 Fontenay (FR)**

(74) Mandataire: **Largeau, Béatrice**
**Fédit-Loriot**
**38, avenue Hoche**
**75008 Paris (FR)**

(56) Documents cités:
**US-A- 2 728 632    US-A- 3 851 405**
**US-A- 4 589 352**

**Description**

La présente invention concerne un procédé de séparation du gaz d'un mélange fluidisé gaz/solide, le réacteur pour la mise en oeuvre de ce procédé et l'utilisation de ce procédé dans un réacteur approprié à des fins d'optimisation industrielle d'unités de conversions industrielles de produits chimiquement actifs en particulier dans les unités de craquage catalytique en lit fluidisé (ci-après FCC ou fluid catalytic cracking en anglais).

Depuis de longues années les industriels sont préoccupés par la séparation des gaz récupérés à la sortie d'un réacteur contenant un mélange fluidisé gaz/solide. En effet, dans de tels mélanges, le gaz entraîne des particules solides et ce d'autant plus que la vitesse du gaz est élevée. A la sortie de tels mélanges, il est usuel de disposer de séparateurs cycloniques efficaces. Cependant, ces cyclones s'usent rapidement lorsque la quantité et/ou la vitesse des particules solides entraînées par les gaz est importante, les dites particules ayant un effet abrasif sur la paroi interne des dits cyclones.

Il est communément accepté que la durée de vie d'un cyclone en termes d'érosion diminue aussi bien avec la concentration en solide entraîné par le gaz qu'avec la vitesse de ce dernier. Donc moins la vitesse du gaz et la concentration de solides sont élevées, plus la durée de vie des cyclones est longue. L'allongement de la durée de vie des cyclones permet soit d'augmenter les débits des gaz alimentés aux unités ne présentant pas d'usures prématurées, soit de diminuer le nombre d'arrêts d'unités souffrant de problèmes récurrents d'usure. Cette usure est constatée par exemple dans les unités ou parties d'unités contenant des mélanges fluidisés comme dans les unités FCC que ce soit à l'intérieur du réacteur ascendant ou descendant, ou à l'intérieur du désengageur, ou encore à l'intérieur du régénérateur. Les industriels constatent à la fois une usure rapide des cyclones et une perte de solides importante.

Pour limiter l'abrasion de ces cyclones dont la durée de vie est ainsi raccourcie, et la perte de solides à l'origine de problèmes environnementaux et de l'érosion des systèmes disposés en aval qui grève encore le coût de la maintenance des unités mettant en oeuvre ces mélanges fluidisés, voire du coût supplémentaire de rachat de catalyseur, de nombreux dispositifs ont été proposés.

Tous ces dispositifs sont placés dans une partie du mélange fluidisé où le lit est plus ou moins dense. Par exemple dans le brevet US2687343, on dispose un appareil à l'interface de la phase dense avec la phase diluée du lit fluidisé. C'est un agencement de 2 tubes concentriques recourbés en forme d'anneaux, disposés l'un à l'intérieur de l'autre, supportant une chicane ainsi qu'une grille épaisse formant des conduites perpendiculaires aux parois du réacteur, l'ensemble étant maintenu solidaire. Cet agencement est mobile sur toute la hauteur du réacteur.

Dans le brevet US 3851405, on dispose des barres ou des tubes disposés à des intervalles fixes, la fonction de ces barres ou tubes étant de ralentir la vitesse des particules qui volent au-dessus du mélange fluidisé. L'intervalle entre chaque interne et son plus proche voisin tombe dans l'intervalle de 0,005 à 0,3 fois la hauteur du lit fluidisé et le rapport de la surface de projection de l'ensemble des internes sur la surface de section du réacteur n'est pas moins grand que 0,5.

Dans le brevet EP49130, le dispositif permettant de réduire le nombre de particules entraînées dans le gaz, est un interne placé dans une zone libre du réacteur dont le rapport de la surface projetée sur la section du réacteur n'est pas moins que 0,8 et dont le rapport de l'ouverture sur la surface de la section non occupée du réacteur varie de 0,3 à 0,9. Un tel interne est obtenu par l'association de disques et d'anneaux, de corps en rotation et/ou un assemblage de lames inclinées pour prévoir une évacuation descendante des grains.

De tels dispositifs de l'art antérieur favorisent le ralentissement des particules entraînées dans un fluide mais en occupant une surface de passage trop importante ils favorisent l'augmentation de la vitesse des flux gazeux et donc l'entraînement des particules au lieu de limiter celui-ci. En outre, la restriction de passage induite par de tels dispositifs peut provoquer une perte de charge incompatible avec le bon fonctionnement des unités mettant en oeuvre des lits fluidisés.

Dans le brevet US2728632, il a été proposé de disposer au-dessus du lit fluidisé une seule couche de déflecteurs parallèles entre eux, chaque déflecteur faisant un angle alpha avec la verticale variant de 1 à 30 degrés et dont le rapport de la largeur de chaque déflecteur sur la distance (diamètre) séparant deux déflecteurs est d'au moins 4:1, de préférence compris entre 8:1 et 15:1. Cet agencement de déflecteurs occupe tout le volume non occupé par le lit fluidisé dense dans le réacteur. Cet agencement peut être appliqué aussi bien pour des mélanges gaz/solides que pour des mélanges liquide/solides et serait applicable au procédé de craquage catalytique. Cependant, plus le rapport de la largeur de chaque déflecteur sur la distance (diamètre) séparant deux déflecteurs est élevé, plus le volume occupé par l'interne est grand. Dans le cas d'un procédé de craquage catalytique par exemple, cette configuration serait incompatible avec la présence d'autres équipements, tel que les cyclones, à l'intérieur de la capacité. Par ailleurs, un interne d'une telle taille implique des contraintes mécaniques liées, notamment, au poids des plaques.

D'autres spécialistes des lits fluidisés ont proposé d'introduire dans la partie dense d'un lit fluidisé des internes permettant de séparer le lit en flux distincts permettant un meilleur contact entre le lit de solides descendant avec les gaz introduits à contre courant comme il est décrit dans la demande WO00/035575.

La demanderesse a donc choisi de préconiser un procédé de séparation des particules du gaz issu d'un lit fluidisé qui consiste à couvrir la plus grande surface possible de la section du réacteur au moyen d'un interne en vue de rabattre le maximum de particules vers le lit tout en limitant la surface occupée par celui-ci à tout niveaux du dit réacteur pour obtenir la plus grande surface de passage possible, et en limitant le volume qu'il occupe à l'intérieur du dit réacteur .

Dans le cadre de la présente description, on entend par section du réacteur le plan sécant perpendiculairement à l'axe du dit réacteur. La section libre du réacteur est la surface de passage laissée libre sur le plan de la section du dit réacteur, hors équipement interne (cyclones, conduites tubulaires, autres dispositifs usuels).

La présente invention a donc pour objet un procédé de séparation de gaz d'un mélange fluidisé gaz/solides contenu dans un réacteur lequel comprend au moins une injection et une sortie d'évacuation de gaz, et éventuellement au moins une injection et une sortie des solides dans le dit mélange fluidisé, caractérisé en ce qu'il comprend une étape de séparation des solides entraînés par le gaz au moyen d'un interne placé parallèlement à la section du réacteur dans la partie du mélange fluidisé où le taux de vide est supérieur à 0,7, la section de cet interne parallèlement au plan de la section libre dudit réacteur occupant moins de 10% de la section libre du réacteur et en ce que l'interne comprend au moins un interne unitaire lequel comprend au moins deux couches de déflecteurs. Chaque déflecteur est constitué d'une plaque ou d'au moins deux ailettes.

Par solides, on entend tout type de matériaux utilisés dans des mélanges fluidisés, mais on parlera avantageusement de particules solides compte tenu de la taille habituelle des solides mis en mélanges fluidisés.

Avantageusement, les déflecteurs d'une même couche dudit au moins un interne unitaire sont inclinés en sens opposé par rapport aux déflecteurs de la couche adjacente.

On entend par angles en sens opposés des angles qui sont, par rapport à la section du réacteur, l'un aigu et l'autre obtus.

Dans le cadre de la présente invention, lorsque l'interne occupe moins de 10% de la section libre du réacteur, cela veut dire que la surface occupée par la section du dit interne parallèle ou superposable à la section libre du réacteur correspond à moins de 10% de la surface de la dite section libre. Ainsi, contrairement à d'autres systèmes de l'art antérieur, tel que celui du document US 4 589 352, il n'existe pas de volume de rétention de solide sous l'interne.

Le taux de vide d'un mélange fluidisé est défini comme étant le rapport du volume de gaz sur le volume total du mélange fluidisé. On définira donc une phase dense du mélange fluidisé comme étant celle où le taux de vide est inférieur à 0,7, soit, lorsque le volume du gaz est inférieur à 70% du volume du mélange fluidisé. La phase diluée sera définie comme celle où le taux de vide est supérieur à 0,7, soit, lorsque le volume du gaz est supérieur à 70% du volume du mélange fluidisé.

Pour calculer le taux de vide d'un mélange fluidisé, on ne peut que se rapprocher de la densité des constituants du dit mélange fluidisé. On sait que le taux de vide ou son corollaire la densité d'un mélange fluidisé n'est pas uniforme sur toute sa hauteur et/ou sa largeur dans un réacteur, et notamment qu'elle varie très fortement entre la partie inférieure et la partie supérieure de ce dernier. Le taux de vide peut être calculé à partir de la densité du gaz présent dans le mélange fluidisé (Dg), de la densité des solides utilisés (Ds) et de la densité du mélange fluidisé (Dm).

On calcule ce taux de vide à partir de l'équation (I) suivante :

$$\text{Taux de vide} = (Ds - Dm) / (Ds - Dg) \text{ (I)}$$

Les densités du solide et du mélange de gaz contenu dans le mélange fluidisé peuvent être mesurées et/ou calculées par des techniques connues en soit de l'Homme du Métier.

La densité du mélange fluidisé est obtenue par exemple, par mesure de la perte de charge au moyen de capteurs de pression disposés à deux niveaux du dit mélange, considérant qu'un mélange fluidisé se comporte comme un liquide (voir description page 5 de l'ouvrage « Fluidization Engineering » de Daizo Kunii et Octave Levenspiel - 2ème édition, 1991). Comme la perte de charge mesuré entre ces deux points du mélange fluidisé est égale selon l'équation (II) ci-dessous :

$$DP = Dm * g * H \text{ (II)},$$

au produit de Dm la densité mélange fluidisé, de g l'accélération de la pesanteur et de H la distance séparant ces deux points, nous pouvons recalculer facilement Dm.

Dans un mode particulier de réalisation de l'invention, si le mélange fluidisé contient un solide dont la densité apparente est de l'ordre de 1350 kg/m$^3$, dans un mélange gazeux contenant plus de 70% d'azote à une pression voisine de 2 bars et une température de l'ordre de 750°C, l'interne selon l'invention sera de préférence positionné au niveau de la partie du mélange fluidisé dont le taux de vide est supérieur à 0,7 et la densité est inférieure à 400Kg/m$^3$.

Parmi les avantages de la présente invention, l'un est lié à l'interne qui ne réduit que très faiblement la section de passage des gaz par rapport à la section du réacteur à tous niveaux et n'induit qu'une très faible perte de charge. De ce fait, la vitesse du gaz n'augmente pas ou peu et on ne constate pas d'entraînement supplémentaire de particules induites par la présence de cet interne. En outre, le fait d'utiliser au moins deux couches de déflecteurs inclinés dans des sens opposés par rapport à la section du réacteur d'une couche à l'autre, permet de réduire le volume qu'occupe l'interne à l'intérieur du réacteur. L'interne proposé agit comme un séparateur balistique compact qui réduit l'énergie cinétique des particules solides qui sont entraînées par le gaz.

Un autre avantage de l'invention est aussi de pouvoir placer l'interne à n'importe quel niveau dans la phase diluée sans risquer d'entraîner des particules solides par une augmentation de la vitesse de passage du gaz suite au passage au travers de l'interne.

Un autre avantage lié à la diminution de l'entrainement des particules solides au-delà de l'interne, est la légère densification de la phase diluée disposée sous le dit interne permettant ainsi lorsque la réaction mise en oeuvre est exothermique, une meilleure évacuation de la chaleur dégagée par la réaction et donc un meilleur contrôle des réactions secondaires susceptibles de se produire. Par exemple, pour une réaction de combustion comme dans les procédés de régénération catalytique en FCC, il y a une meilleure évacuation de la chaleur produite par combustion du monoxyde de carbone grâce à la présence d'une phase densifiée de particules solides et donc, une diminution des écarts de température provoqués par le phénomène de post combustion.

On peut également augmenter la durée de vie des cyclones dans les unités présentant une érosion et réduire les périodes d'arrêt d'unités pour réparation et conséquemment les coûts liés aux pertes de productions et coûts de remplacement de dispositifs.

Enfin, on peut augmenter les débits dans l'unité sans risquer d'arrêts prématurés des unités dus à l'érosion des cyclones.

La présente invention concerne l'utilisation dans le procédé d'un interne dont le rapport de la surface de projection de l'interne sur la surface de la section libre du réacteur est supérieure à 0,75. La section libre du réacteur est dans un réacteur industriel, la section non occupée par d'autres équipements tels que des cyclones, des conduites tubulaires ou tout autre dispositif usuel, c'est-à-dire la surface de passage laissée libre sur le plan de la section dudit réacteur.

Dans le procédé tel que revendiqué, l'interne limite l'entrainement des solides et n'augmente pas de plus de 10% la vitesse des gaz qui le traversent.

En outre, avantageusement l'interne est configuré pour occuper moins de 5% de la section libre du réacteur et pour que le rapport de la surface de projection de l'interne sur la surface de la section libre du réacteur varie de 0,8 à 1. Ainsi une projection de l'interne sur 100% de la section libre du réacteur est considérée comme l'optimal atteint pour l'invention, surtout lorsque l'interne occupe largement moins de 5% de la surface de la section libre du réacteur.

Un autre objet de l'invention est un réacteur destiné à contenir le mélange fluidisé, comprenant des conduites d'arrivée de gaz et de solides, au moins une conduite d'évacuation de gaz et une conduite d'évacuation des solides caractérisé en ce qu'il comprend un interne occupant au plus 10% de la surface la dite section libre du réacteur, et dont la surface projetée sur la dite section libre du réacteur correspond à plus de 75% de la surface de la dite section libre du réacteur, le dit interne étant disposé dans une partie du dit réacteur où le taux de vide du mélange fluidisé est inférieur à 0,7. Chaque déflecteur est constitué d'une plaque ou d'au moins deux ailettes.

Pour effectuer sa fonction de rabattage des particules solides dans le lit fluidisé, l'interne comprend avantageusement des moyens adaptés à la déflexion des solides vers le fond du dit réacteur.

Selon l'invention, cet interne comprend au moins un interne unitaire, de préférence au moins deux internes dit unitaires, chaque interne unitaire comprenant au moins deux couches de déflecteurs, les dits déflecteurs de la deuxième couche étant inclinés par rapport à la section du dit réacteur en sens opposé à ceux de la première couche. De façon pratique pour les grandes surfaces, l'interne comprendra plusieurs internes unitaires à l'intérieur du réacteur. En effet, pour réaliser l'interne à l'échelle industrielle, on formerait l'interne couvrant en tout ou partie la section libre du réacteur par la juxtaposition d'internes unitaires permettant d'atteindre les caractéristiques de l'interne selon l'invention. Dans ce mode de réalisation les déflecteurs d'une même couche ne sont pas nécessairement toujours parallèles entre eux, puisque un interne industriel peut être constitué de plusieurs internes unitaires.

De manière préférée, chaque interne unitaire comprend au moins deux couches de déflecteurs disposés parallèlement les uns des autres le long d'une même couche et maintenus solidaires entre eux par tous moyens connus de l'homme de l'art. Les distances $E_i$ séparant deux déflecteurs d'une même couche peuvent être identiques ou différentes.

Dans un mode particulier de l'invention, les bords inférieurs des déflecteurs d'une couche et les bords supérieurs des déflecteurs de la couche disposée immédiatement en dessous font un angle $\alpha$ variant de 0 à 90 degrés. De façon préférée, l'angle $\alpha$ est choisi comme étant égal à 0 degrés ou à 90 degrés.

Lorsque l'angle $\alpha$ est égal à zéro, d'une couche à l'autre les déflecteurs sont disposés de telle façon que les bords inférieurs des déflecteurs d'une couche sont placés à une distance d des bords supérieurs des déflecteurs de la couche disposée immédiatement en dessous, d variant de 0 à $E_i$. Dans un mode préféré, tous les espacements $E_i$ sont identiques et d est égal à $E_i/2$.

Dans une même couche, chaque déflecteur est constitué d'au moins une plaque faisant un angle θ avec la section du dit réacteur de telle façon que sin θ est égal au rapport de l'épaisseur d'une couche h sur la largeur L de la dite plaque.

De préférence, Ei sera choisi inférieur ou égal au produit de L par le cosinus de l'angle θ, ceci afin de garantir que l'intégralité du flux gaz - solide traversant un interne unitaire rentre en contact avec les déflecteurs.. Dans les couches d'un même interne unitaire, les largeurs L des plaques des déflecteurs peuvent varier d'une couche à l'autre.

De manière préférée, l'angle θ sera choisi comme variant de 10 à 90 degrés, voire de 10 à 60 degrés, par rapport à la section du dit réacteur.

De façon plus préférée, l'angle θ est choisi comme variant de 30 à 60 degrés par rapport à la section du dit réacteur pour chaque couche de déflecteurs.

Dans deux couches successives $C_1$ et $C_2$, les angles $\theta_1$ et $\theta_2$ des déflecteurs sont différents par rapport à la section du réacteur, l'un étant aigu, l'autre obtus pour obtenir des inclinaisons en sens opposés. Dans un mode préféré, $\theta_2$ est égal à $\theta_1+90$ ou à $180- \theta_1$ degrés.

Dans une forme préférée de l'invention, l'interne unitaire comprend au moins trois couches de déflecteurs faisant un angle $\theta_i$ avec la section du dit réacteur, et une quatrième couche dite de redressement disposée au-dessus des trois premières couches, comprenant des déflecteurs perpendiculaires à la section du dit réacteur. Cette dernière couche permet d'uniformiser les flux des gaz après passage de celui-ci au travers des trois premières couches et la largeur L des déflecteurs de cette dernière couche étant choisie généralement plus petite que celles des déflecteurs des couches situées en amont. Dans cette configuration, les angles $\theta_i$ sont choisis tels que les déflecteurs de la première et de la troisième couche sont inclinés dans le même sens, et ceux de la deuxième couche en sens opposé aux précédents.

On ne sortirait pas du cadre de l'invention si chaque déflecteur était constitué par au moins deux ailettes en remplacement de la dite plaque, celles-ci sont de préférence de largeurs égales et font un angle deux à deux variant de 0 à 90 degrés. L'utilisation d'une pluralité d'ailettes disposées les unes à côté des autres et faisant entre elles un angle variant de 0 à 90 degrés permettrait de diminuer encore le volume occupé par l'interne dans le dit réacteur, deux couches pouvant venir s'imbriquer l'une dans l'autre. C'est le cas d'internes tels que décrit dans WO00/35575. Un dernier objet de l'invention est l'utilisation du dit procédé dans un réacteur équipé d'un interne tel que décrit ci-dessus à la séparation gaz solides d'un lit catalytique fluidisé, plus particulièrement à la séparation gaz solides du lit fluidisé d'un régénérateur d'une unité de craquage catalytique et/ou du désengageur/stripeur à la sortie du réacteur, dans la partie la moins dense du mélange gaz/solides.

Dans ce mode particulier de réalisation de l'invention, l'interne sera avantageusement disposé dans le régénérateur à un niveau du lit fluidisé dont la densité sera inférieure à $400Kg/m^3$.

La présente invention est maintenant décrite à la lueur des figures et exemples donnés ci-après.

La figure 1 montre 2 couches d'un interne dont les déflecteurs Di et Dj font chacun un angle θ=45° avec l'horizontale et les bords inférieurs des déflecteurs Di et les bords supérieurs des déflecteurs Dj font angle α égal à 90°.

Deux déflecteurs adjacents d'une même couche sont séparés par une distance $E_i$.

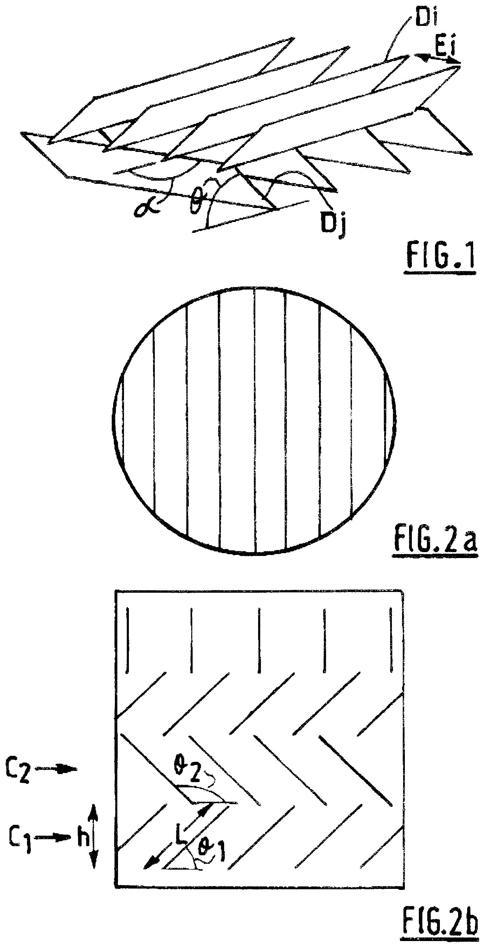

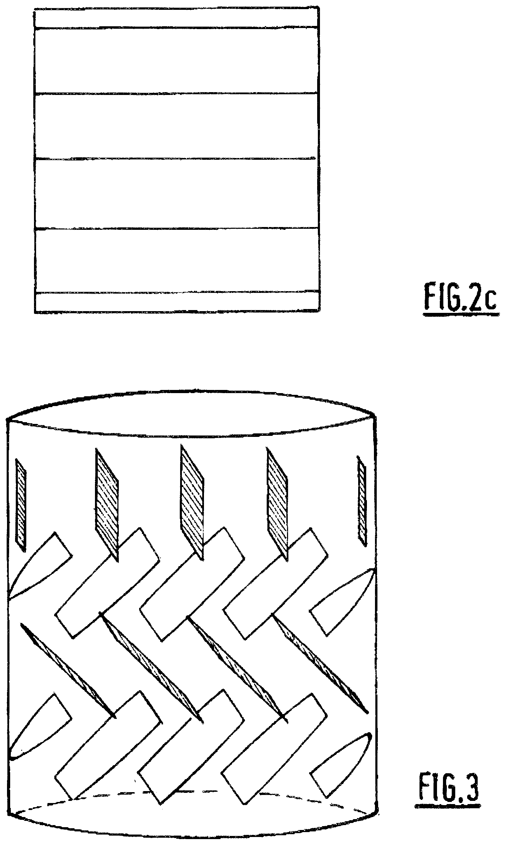

La figure 2 montre l'agencement préféré de l'invention. Il s'agit d'un interne (unitaire) complet avec 4 couches dont 3 couches de déflecteurs et une couche de redressement. L'angle θ est de 45° et l'angle α est égal à 0°. La figure 2-a correspond à une vue de dessus de l'interne ici constitué d'un seul interne unitaire. La figure 2-b correspond à une coupe de l'interne selon une section dans la hauteur du réacteur perpendiculaire à la figure 2-a précédente. Les angles et distances mentionnées dans la présente description y sont représentés. La figure 2-c représente une coupe dans la hauteur du réacteur perpendiculaire à celle représentée dans la figure 2-b : on y voit le nombre de couches et la hauteur de chacune d'entres elles.

La figure 3 montre en représentation spatiale un élément cylindrique figurant une capacité contenant un interne à 4 couches dont 3 couches de déflecteurs et une couche de redressement.

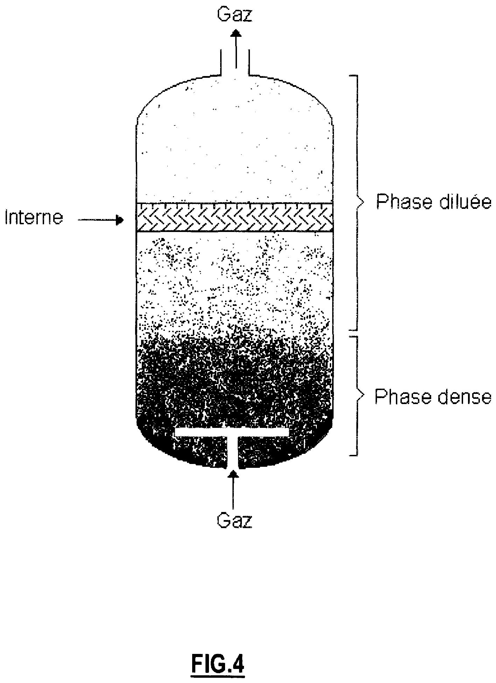

La figure 4 représente le réacteur selon l'invention dans lequel l'interne est disposé au sein de la phase diluée du dit réacteur.

Dans la suite de la présente description, des exemples sont donnés à titre illustratif mais non limitatif de la présente invention.

EXEMPLE I

Dans le présent exemple on décrit l'évolution de la masse de particules entraînées pour une vitesse superficielle de gaz de 0,8 m/s lorsque le rapport de la surface de projection de l'interne sur la section du réacteur (Ps) passe de 0, 5 à 1.

Dans cet exemple on a dimensionné l'interne unitaire pour son utilisation dans un réacteur de laboratoire.

Le réacteur dans lequel est placé l'interne mesure 0,34m de diamètre. Dans les conditions d'utilisation du réacteur, la phase diluée a une hauteur de 3,5m.

L'interne est composé de trois couches, l'angle alpha entre deux couches successives étant égal à 0.

La première et la troisième couches comprennent chacune 4 déflecteurs, la deuxième couche n'en comprend que 3 en raison de contraintes géométriques et pour éviter toute chicane bloquant la circulation des gaz et solides.

Dans une couche inférieure, l'angle $\theta$ d'inclinaison des plaques est de 45 degrés. Dans la couche immédiatement supérieure, cet angle $\theta$ est de 135 degrés, et dans la troisième couche, l'angle $\theta$ est à nouveau égal à 45 degrés.

La distance Ei entre les déflecteurs est de 0,07 mètre.

La largeur L des plaques constituant les déflecteurs est de 0,1mètre.

La distance « d » entre les bords supérieurs des déflecteurs de la première couche et les bords inférieurs des déflecteurs de la deuxième couche est fixé à E/2, soit, 0,035 m.

L'épaisseur de chaque couche est de 0,07 m, soit le résultat du produit entre la largeur « L » des déflecteurs et le sinus de l'angle $\theta$.

Dans son intégralité, l'interne ainsi conçu a une hauteur de 0,21 m soit environ 6% de la hauteur totale de la phase diluée du réacteur. Pour cet interne la surface de projection de l'interne sur la section du réacteur, Ps, est de 1.

Pour obtenir des valeurs de Ps de 0,75 et 0,5 tel que décrit dans le tableau 1 ci-dessous, on retire respectivement 1, puis 2 déflecteurs par couche.

Tableau 1

| Ps | Masse des particules entraînées (%) |
|---|---|
| Pas d'interne | 100 |
| 0,5 | 71 |
| 0,75 | 54 |
| 1,00 | 32 |

On constate que plus le rapport de la surface de projection de l'interne sur la section du réacteur (Ps) est élevé moins la masse de particules entraînée par les gaz est élevée.

EXEMPLE II

Dans le présent exemple, on décrit l'évolution de la masse de particules entraînées pour une vitesse superficielle de gaz de 0,8 m/s pour des internes ayant 2 ou 3 couches de déflecteurs (Nc). Dans ce cas, le rapport de la surface de projection de l'interne sur la section du réacteur (Ps) est de 1. Les couches de déflecteurs sont orientées selon la configuration préférée de l'invention avec $\theta_1$=45°, $\theta_2$= $\theta_1$+90° et $\alpha$=0° pour $N_C$ = 2 et $\theta_1$=45°, $\theta_2$= $\theta_1$+90°, $\theta_3$= $\theta_1$ et $\alpha$=0° pour $N_C$ = 3.

L est choisie égale à 0.28m, donc la distance entre deux plaques est Ei inférieure ou égale à 0.198m et la hauteur h de chaque couche est égale à 0.198m

Tableau 2

| Nc | Masse des particules entraînées (%) |
|---|---|
| Pas d'interne | 100 |
| 1 | 75 |
| 2 | 58 |
| 3 | 32 |

On constate que plus le nombre de couches équipées de déflecteurs est élevé moins la masse de particules entraînée par les gaz est élevée.

**Revendications**

1. Procédé de séparation de gaz d'un mélange fluidisé gaz/solides contenu dans un réacteur lequel comprend au moins une injection et une sortie d'évacuation de gaz, et éventuellement au moins une injection et une sortie de solides, **caractérisé en ce qu'**il comprend une étape de séparation des solides entraînés par les gaz au moyen d'un interne placé parallèlement à la section du réacteur dans la partie du mélange fluidisé où le taux de vide est supérieur à 0,7, la section de cet interne parallèlement au plan de la section libre dudit réacteur occupant moins de 10% de la section libre du réacteur et le rapport de la surface de projection de l'interne sur la surface de la section libre du réacteur est supérieure à 0,75, et

**en ce que** le dit interne comprend au moins un interne unitaire lequel comprend au moins deux couches de déflecteurs, chaque déflecteur étant constitué d'une plaque ou d'au moins deux ailettes.

**2.** Procédé selon la revendication 1, **caractérisé en ce que** les déflecteurs d'une même couche dudit au moins un interne unitaire sont inclinés en sens opposé par rapport aux déflecteurs de la couche adjacente.

**3.** Procédé selon l'une des revendications 1 à 2, **caractérisé en ce que** le dit interne est configuré pour limiter l'entraînement des solides et ne pas augmenter de plus de 10% la vitesse des gaz qui le traversent.

**4.** Procédé selon l'une des revendications 1 à 3, **caractérisé en ce que** l'interne occupe moins de 5% de la section libre du réacteur et le rapport de la surface de projection de l'interne sur la surface de la section libre du réacteur varie de 0,8 à 1.

**5.** Réacteur pour la mise en oeuvre le procédé selon l'une des revendications 1 à 4, destiné à contenir le mélange fluidisé et comprenant des conduites d'arrivée de gaz et de solides, au moins une conduite d'évacuation de gaz et une conduite d'évacuation des solides, **caractérisé en ce qu'**il comprend parallèlement à sa section, un interne occupant au plus 10% de la surface de la dite section libre du réacteur, et la surface projetée de l'interne sur la dite section libre du réacteur correspond à plus de 75% de la surface de la dite section libre, le dit interne étant disposé dans une partie du dit réacteur où le taux de vide attendu est supérieur à 0,7 et **en ce que** le dit interne comprend au moins un interne unitaire lequel comprend au moins deux couches de déflecteurs, chaque déflecteur étant constitué d'une plaque ou d'au moins deux ailettes.

**6.** Réacteur selon la revendication 5, **caractérisé en ce que** les déflecteurs d'une même couche dans ledit interne unitaire sont inclinés en sens opposé par rapport aux déflecteurs de la couche adjacente.

**7.** Réacteur selon l'une des revendications 5 ou 6, **caractérisé en ce que** le dit interne comprend au moins deux internes unitaires à l'intérieur du réacteur et **en ce que** l'interne unitaire comprend au moins deux couches de déflecteurs disposés parallèlement les uns des autres le long d'une même couche et maintenus solidaires, les distances $E_i$ les séparant pouvant être identiques ou différentes.

**8.** Réacteur selon l'une des revendications 5 à 7, **caractérisé en ce que** les bords inférieurs des déflecteurs d'une couche et les bords supérieurs des déflecteurs de la couche disposée immédiatement en dessous font un angle $\alpha$ variant de 0 à 90 degrés.

**9.** Réacteur selon la revendication 8, **caractérisé en ce que**, lorsque l'angle $\alpha$ vaut 0, les bords inférieurs des déflecteurs d'une couche sont placés à une distance d des bords supérieurs des déflecteurs de la couche disposée immédiatement en dessous, d variant de 0 à $E_i$,

**10.** Réacteur selon l'une des revendications 5 à 9, **caractérisé en ce que** le déflecteur est constitué d'une plaque faisant un angle $\theta$ avec la section du dit réacteur de telle façon que $\sin \theta$ est égal au rapport de l'épaisseur d'une couche h sur la largeur L de la dite plaque.

**11.** Réacteur selon l'une des revendications 5 à 10, **caractérisé en ce que** l'angle $\theta$ varie de 10 à 90 degrés, voire de 10 à 60 degrés, par rapport à la section du dit réacteur, de préférence $\theta$ varie de 30 à 60 degrés par rapport à la section du dit réacteur.

**12.** Réacteur selon l'une des revendications 5 à 11, **caractérisé en ce que** dans deux couches successives $C_1$ et $C_2$, les angles $\theta_1$ et $\theta_2$ des déflecteurs sont identiques ou différents, de préférence, $\theta_2$ est égal à $\theta_1 + 90$ ou $180 - \theta_1$ degrés.

**13.** Réacteur selon l'une des revendications 5 à 12, **caractérisé en ce que** l'interne unitaire comprend au moins trois couches de déflecteurs faisant un angle $\theta_i$ avec la section du dit réacteur, et une quatrième couche dite de redressement disposée au-dessus des trois premières couches, comprenant des déflecteurs perpendiculaires à la section du dit réacteur.

**14.** Réacteur selon l'une des revendications 5 à 13, **caractérisé en ce que** chaque déflecteur étant constitué par au moins deux ailettes, celles-ci sont de largeurs égales et font un angle deux à deux variant de 0 à 90 degrés.

**15.** Utilisation du procédé selon les revendications 1 à 4 mis en oeuvre dans un réacteur selon les revendications 5 à 14 à la séparation gaz solides d'un lit catalytique fluidisé.

**16.** Utilisation selon la revendication 15 pour la séparation gaz solides du lit fluidisé d'un régénérateur d'une unité de craquage catalytique et/ou du désengageur/stripeur à la sortie du réacteur, dans la partie la moins dense du mélange gaz/solides.

**Patentansprüche**

**1.** Verfahren zur Abscheidung von Gas einer fluidisierten Gas-/Feststoffmischung, die in einem Reaktor enthalten ist, der mindestens eine Einspritzung und einen Auslass zur Abführung von Gas und gegebenenfalls mindestens eine Einspritzung und einen Auslass für Feststoffe umfasst, **dadurch gekennzeichnet, dass** es einen Schritt des Abscheidens der von den Gasen mitgeführten Feststoffe mittels eines Innenelements umfasst, das parallel zum Querschnitt des Reaktors in dem Bereich der fluidisierten Mischung platziert ist, in dem die Leerraumrate größer als 0,7 ist, wobei der Querschnitt dieses Innenelements parallel zur Ebene des freien Querschnitts des Reaktors weniger als 10% des freien Querschnitts des Reaktors einnimmt und der Quotient aus der Projektionsfläche des Innenelements und der Fläche des freien Querschnitts des Reaktors größer als 0,75 ist, und dadurch, dass das Innenelement mindestens ein einteiliges Innenelement umfasst, das mindestens zwei Lagen Deflektoren umfasst, wobei jeder Deflektor aus einer Platte oder aus mindestens zwei Rippen besteht.

**2.** Verfahren nach Anspruch 1, **dadurch gekennzeichnet, dass** die Deflektoren derselben Lage des mindestens einen einteiligen Innenelements entgegengesetzt zu den Deflektoren der benachbarten Lage geneigt sind.

**3.** Verfahren nach einem der Ansprüche 1 bis 2, **dadurch gekennzeichnet, dass** das Innenelement dazu ausgebildet ist, das Mitführen der Feststoffe zu begrenzen und die Geschwindigkeit der Gase, die es durchströmen, um nicht mehr als 10% zu erhöhen.

**4.** Verfahren nach einem der Ansprüche 1 bis 3, **dadurch gekennzeichnet, dass** das Innenelement weniger als 5% des freien Querschnitts des Reaktors einnimmt und der Quotient aus der Projektionsfläche des Innenelements und der Fläche des freien Querschnitts des Reaktors zwischen 0,8 und 1 variiert.

**5.** Reaktor zur Durchführung des Verfahrens nach einem der Ansprüche 1 bis 4, der dazu bestimmt ist, die fluidisierte Mischung zu enthalten, und der Zuleitungen für Gase und Feststoffe, mindestens eine Abführleitung für Gase und eine Abführleitung für Feststoffe umfasst, **dadurch gekennzeichnet, dass** er parallel zu seinem Querschnitt ein Innenelement umfasst, das höchstens 10% der Fläche des freien Querschnitts des Reaktors einnimmt, und die auf den freien Querschnitt des Reaktors projizierte Fläche des Innenelements mehr als 75% der Fläche des freien Querschnitts entspricht, wobei das Innenelement in einem Bereich des Reaktors angeordnet ist, in dem die erwartete Leerraumrate größer als 0,7 ist, und dadurch, dass das Innenelement mindestens ein einteiliges Innenelement umfasst, das mindestens zwei Lagen Deflektoren umfasst, wobei jeder Deflektor aus einer Platte oder aus mindestens zwei Rippen besteht.

**6.** Reaktor nach Anspruch 5, **dadurch gekennzeichnet, dass** die Deflektoren derselben Lage in dem einteiligen Innenelement entgegengesetzt zu den Deflektoren der benachbarten Lage geneigt sind.

**7.** Reaktor nach einem der Ansprüche 5 oder 6, **dadurch gekennzeichnet, dass** das Innenelement mindestens zwei einteilige Innenelemente im Innern des Reaktors umfasst, und dadurch, dass das einteilige Innenelement mindestens zwei Lagen Deflektoren umfasst, die parallel zueinander entlang derselben Lage angeordnet sind und fest verbunden gehalten werden, wobei die sie trennenden Abstände $E_i$ identisch oder unterschiedlich sein können.

**8.** Reaktor nach einem der Ansprüche 5 bis 7, **dadurch gekennzeichnet, dass** die Unterkanten der Deflektoren einer Lage und die Oberkanten der Deflektoren der unmittelbar darunter angeordneten Lage einen Winkel $\alpha$ bilden, der zwischen 0 und 90 Grad variiert.

**9.** Reaktor nach Anspruch 8, **dadurch gekennzeichnet, dass**, wenn der Winkel $\alpha$ gleich 0 ist, die Unterkanten der Deflektoren einer Lage in einem Abstand d von den Oberkanten der Deflektoren der unmittelbar darunter angeordneten Lage platziert sind, wobei d zwischen 0 und $E_i$ variiert.

10. Reaktor nach einem der Ansprüche 5 bis 9, **dadurch gekennzeichnet, dass** der Deflektor aus einer Platte besteht, die einen Winkel $\theta$ mit dem Querschnitt des Reaktors bildet, so dass sin $\theta$ gleich dem Quotienten aus der Dicke einer Lage h und der Breite L der Platte ist.

11. Reaktor nach einem der Ansprüche 5 bis 10, **dadurch gekennzeichnet, dass** der Winkel $\theta$ zwischen 10 und 90 Grad oder sogar zwischen 10 und 60 Grad in Bezug auf den Querschnitt des Reaktors variiert und $\theta$ bevorzugt zwischen 30 und 60 Grad in Bezug auf den Querschnitt des Reaktors variiert.

12. Reaktor nach einem der Ansprüche 5 bis 11, **dadurch gekennzeichnet, dass** in zwei aufeinanderfolgenden Lagen $C_1$ und $C_2$ die Winkel $\theta_1$ und $\theta_2$ der Deflektoren identisch oder unterschiedlich sind und $\theta_2$ bevorzugt gleich $\theta_1+90$ oder 180- $\theta_1$, Grad ist.

13. Reaktor nach einem der Ansprüche 5 bis 12, **dadurch gekennzeichnet, dass** das einteilige Innenelement mindestens drei Lagen Deflektoren umfasst, die einen Winkel $\theta_i$ mit dem Querschnitt des Reaktors bilden, und eine vierte sogenannte Gleichrichtungslage, die über den drei ersten Lagen angeordnet ist und die Deflektoren senkrecht zum Querschnitt des Reaktors umfasst.

14. Reaktor nach einem der Ansprüche 5 bis 13, **dadurch gekennzeichnet, dass** jeder Deflektor aus mindestens zwei Rippen besteht, diese gleich breit sind und paarweise einen Winkel bilden, der zwischen 0 und 90 Grad variiert.

15. Verwendung des Verfahrens nach Anspruch 1 bis 4 in einem Reaktor nach Anspruch 5 bis 14 zur Gas-/Feststoffabscheidung eines katalytischen Wirbelbetts.

16. Verwendung nach Anspruch 15 zur Gas-/Feststoffabscheidung des Wirbelbetts eines Regenerators einer katalytischen Crackingeinheit und/oder des Abtreibers/Strippers im Auslass des Reaktors in dem am wenigsten dichten Bereich der Gas-/Feststoffmischung.

**Claims**

1. A method for separating gas from a fluidized gas/solid mixture contained in a reactor which comprises at least one injector and one outlet for gas discharge, and possibly at least one injector and one outlet for solids, **characterized in that** it comprises a step of separating the solids carried by the gases by means of an internal device placed parallel to the cross-section of the reactor in the portion of the fluidized mixture in which the void fraction is greater than 0.7, the cross-section of said internal device parallel to the plane of the free cross-sectional area of said reactor taking up less than 10% of the free cross-sectional area of the reactor and the ratio of the projection surface of the internal device to the surface of the free cross-sectional area of the reactor is greater than 0.75, and
in that said internal device comprises at least one individual internal device that comprises at least two layers of deflectors, each deflector being made up of one plate or at least two fins.

2. The method according to claim 1, **characterized in that** the deflectors of the same layer of said at least one individual internal device are inclined in the opposite direction relative to the deflectors of the adjacent layer.

3. The method according to one of the claims 1 to 2, **characterized in that** said internal device is configured to limit the carrying of solids and not to increase by more than 10% the speed of the gases that pass therethrough.

4. The method according to one of the claims 1 to 3, **characterized in that** the internal device takes up less than 5% of the free cross-sectional area of the reactor and the ratio of the projection surface of the internal device relative to the free cross-sectional area of the reactor ranges from 0.8 to 1.

5. A reactor for implementing the method according to one of the claims 1 to 4, intended for containing the fluidized mixture and comprising gas- and solid-inlet pipes, at least one gas-discharge pipe and one solid-discharge pipe, **characterized in that** it comprises, parallel to its cross-section, an internal device taking up at most 10% of the surface of said free cross-sectional area of the reactor, and the projected surface of the internal device to said free cross-sectional area of the reactor corresponds to more than 75% of the surface of said free cross-sectional area, said internal device being arranged in a portion of said reactor in which the expected void fraction is greater than 0.7, and **in that** said internal device comprises at least one individual internal device which comprises at least two layers of deflectors, each deflector being made up of one plate or at least two fins.

6. The reactor according to claim 5, **characterized in that** the deflectors of the same layer in said individual internal device are inclined in the opposite direction relative to the deflectors of the adjacent layer.

7. The reactor according to one of the claims 5 or 6, **characterized in that** said internal device comprises at least two individual internal devices inside the reactor and **in that** the individual internal device comprises at least two layers of deflectors arranged parallel to one another along a single layer and rigidly connected, the distances $E_i$ separating same possibly being identical or different.

8. The reactor according to one of the claims 5 to 7, **characterized in that** the lower edges of the deflectors of one layer and the upper edges of the deflectors of the layer immediately below same form an angle $\alpha$ ranging from 0 to 90 degrees.

9. The reactor according to claim 8, **characterized in that**, when the angle $\alpha$ is 0, the lower edges of the deflectors of one layer are placed at a distance d from the upper edges of the deflectors of the layer arranged immediately below same, d ranging from 0 to $E_i$,

10. The reactor according to one of the claims 5 to 9, **characterized in that** the deflector is made up of a plate forming an angle $\theta$ with the cross-section of said reactor so that sin $\theta$ is equal to the ratio of the thickness of one layer h to the width L of said plate.

11. The reactor according to one of the claims 5 to 10, **characterized in that** the angle $\theta$ ranges from 10 to 90 degrees, or from 10 to 60 degrees, relative to the cross-section of said reactor, $\theta$ preferably ranging from 30 to 60 degrees relative to the cross-section of said reactor.

12. The reactor according to one of the claims 5 to 11, **characterized in that** in two consecutive layers $C_1$ and $C_2$, the angles $\theta_1$ and $\theta_2$ of the deflectors are identical or different, $\theta_2$ preferably being equal to $\theta_1$ + 90 or 180 - $\theta_1$ degrees.

13. The reactor according to one of the claims 5 to 12, **characterized in that** the individual internal device comprises at least three layers of deflectors forming an angle $\theta_1$ with the cross-section of said reactor, and a fourth so-called straightening layer arranged above the first three layers, comprising deflectors perpendicular to the cross-section of said reactor.

14. The reactor according to one of the claims 5 to 13, **characterized in that** each deflector is made up of at least two fins, which each have the same width and form between the two an angle ranging from 0 to 90 degrees.

15. A use of the method according to claims 1 to 4 implemented in a reactor according to claims 5 to 14 for gas/solid separation of a fluidized catalytic bed.

16. The use according to claim 15 for gas/solid separation of the fluidized bed of a regenerator of a catalytic cracking unit and/or of the disengager/stripper at the outlet of the reactor, in the least dense portion of the gas/solid mixture.

FIG.1

FIG.2a

FIG.2b

**FIG.2c**

**FIG.3**

Gaz

Interne →

Phase diluée

Phase dense

Gaz

**FIG.4**

EP 2 605 854 B1